(19) Europäisches Patentamt
European Patent Office
Office européen des brevets

(11) EP 2 200 318 A1

(12) **EUROPEAN PATENT APPLICATION**
published in accordance with Art. 153(4) EPC

(43) Date of publication:
**23.06.2010 Bulletin 2010/25**

(21) Application number: **08852720.5**

(22) Date of filing: **14.11.2008**

(51) Int Cl.:
***H04N 7/26*** *(2006.01)* ***H04N 1/41*** *(2006.01)*
***H04N 5/225*** *(2006.01)*

(86) International application number:
**PCT/JP2008/070819**

(87) International publication number:
**WO 2009/066626 (28.05.2009 Gazette 2009/22)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.11.2007 JP 2007303094**

(71) Applicant: **Nec Corporation**
**Tokyo 108-8001 (JP)**

(72) Inventor: **HOSOKAWA, Satoshi**
**Tokyo 108-8001 (JP)**

(74) Representative: **Glawe, Delfs, Moll**
**Patent- und Rechtsanwälte**
**Postfach 26 01 62**
**80058 München (DE)**

# (54) IMAGE CAPTURING DEVICE, ENCODING METHOD, AND PROGRAM

(57) An image capturing device, encoding method, and program in which even if the capturing of a large sized image is required, the capacity of a memory required for processing can be reduced.

The image capturing device comprises a division transfer means for individually outputting arbitrary rectangular areas in captured images, a division encoding means for encoding the data from the division transfer means using a partial encoder, and combining means for combining the encoded data at the end.

Fig.1

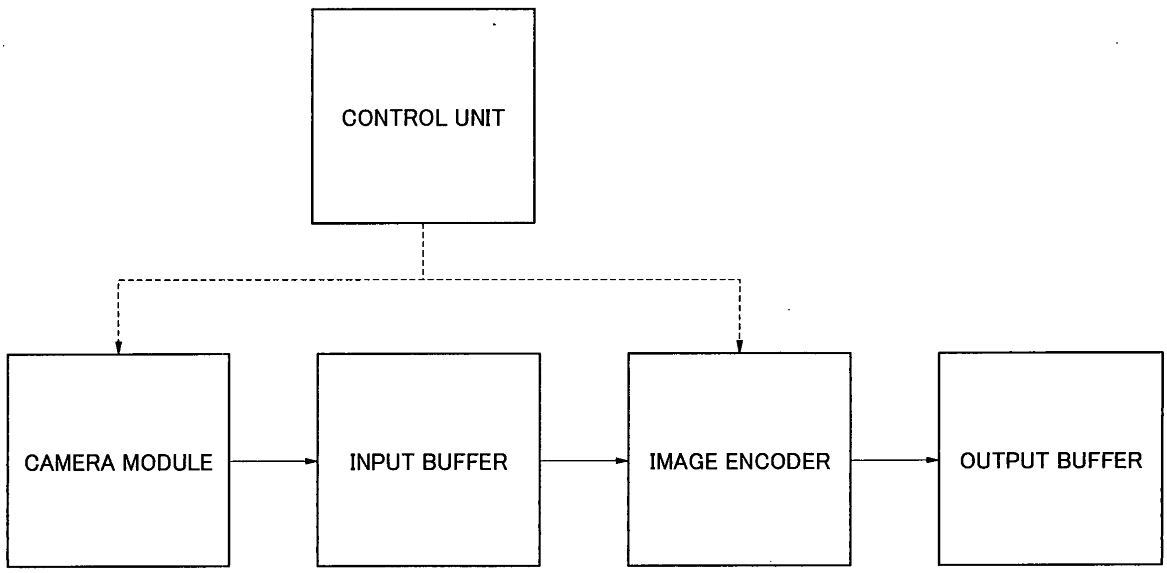


EP 2 200 318 A1

## Description

### TECHNICAL FIELD

The present invention relates to a technology of capturing of a large sized image with a small capacity of a memory in an image capturing device of capturing an image (still image or moving image).

### BACKGROUND ART

The image size being possible of capturing has become growing steadily with the increasing function of an image capturing device, especially of a still image capturing device (camera).

Here, the technology which can easily get correlation between divided image data obtained from dividing an image and image information on divided image data thereof is proposed. The technology includes a buffer memory, an image signal generating unit that generates readout signal by dividing an image from the buffer memory, an image information generating unit that generates image information of an image that is divided and readout, a multiplexing unit that multiplexes the image signal and the image information, a synchronization code detecting unit that separates the divided image data and the image information from the multiplexed image signal, an image encoding unit that encodes the separated divided image data, and a multiplexing unit that multiplexes the separated image information and an encoded bit stream (for example, refer to patent document 1).

Patent document 1: Japanese Patent Laid-Open No. 2000-244912

### DISCLOSURE OF INVENTION

### TECHNICAL PROBLEM

However, since the image encode processing is performed after all images are obtained in the related technology, a large memory as much as for the image size in the image capturing device is necessary, and the large amount of capacity with the increase of an image size has made difficult on the implement.

Especially, when a rotation is required, memory for two images is required before and after the rotation (because the original image cannot be processed by the form of replacement in a rotational process), therefore the capacity required will increase further.

It is an object of the present invention to provide an image capturing device, encoding method, and program that can reduce the capacity of a memory necessary for a process even if capturing of a large sized image is required.

### TECHNICAL SOLUTION

In order to achieve the object, the present invention will have the following features.

The image capturing device of the present invention comprises a division transfer means for individually outputting arbitrary rectangular areas in captured images, a division encoding means for encoding the data from the said division transfer means using a partial encoder, and an combining means for combining the encoded data at the end.

Furthermore, the encoding method of the present invention comprises a division transfer step for individually outputting arbitrary rectangular areas in captured images, a division encoding step for encoding the data from the said division transfer means using a partial encoder, and an combining step for combining the encoded data at the end.

Furthermore, the program of the present invention is characterized by comprising a division transfer step for individually outputting arbitrary rectangular areas in captured images, a division encoding step for encoding the data from the said division transfer means using a partial encoder, and an combining step for combining the encoded data at the end.

### ADVANTAGEOUS EFFECTS

According to the present invention, even when the capturing of a large sized image is required, the capacity of a memory required for processing can be reduced.

### BEST MODE FOR CARRYING OUT THE INVENTION

Hereinafter, preferred embodiments of the present invention will be described in detail with referent to the drawings. The basic structure of the present invention is shown in FIG. 1.

A camera module has a sensor, and converts the image formed in a sensor by a built-in lens or an external lens to digital data (image data).

An input buffer is a RAM which accumulates image data that the camera module outputted.

An image encoder has a function to encode image data in the format of storage, and JPEG encoder and the like is used.

An output buffer is a memory which outputs encoded image data.

A control unit is a program or a system which controls each part according to the operation and the like by a user.

The structure itself of FIG. 1 is the same as a general image capturing device. However, although an input buffer of a general configuration requires the size of one picture, the input buffer of the present invention should prepare only the size of one picture divided by the number of the division (described later) , according to the number the division.

As a typical example, when an image of 5Mpixel with 16bit/pixel is divided into three parts, only 1.67Mpixel (3.3Mbyte) is required according to the method of the present invention whereas normally 5Mpixel (10Mbyte) would be required.

FIG. 2 shows a structure of a camera module. A sensor is a component which captures an image and converts into an electrical signal, and such as CCD and CMOS are known as a converting system.

A lens has a function to form an image of incident ray on a sensor. The lens may be external.

A readout, image processing unit generates image data (raster image) by converting and processing a signal that is readout from the sensor.

An image RAM is a RAM which holds generated image data. The size of one picture is required for the image RAM.

A rectangular readout unit has a function to cut out arbitrary rectangular areas designated by a control unit from an image (of one picture) stored in the image RAM, and to give to a host interface.

The host interface has a function to receive the direction from a host device (in this embodiment, the image capturing device), and a function to transfer an image to the host device.

The control unit is a program or a system which controls each part under the direction from the host device.

Among the configuration of FIG.2, introduction of the rectangular readout unit is the characteristic feature of the present invention. With this feature, it is possible to acquire the image by each one part. Other parts other than the one described are of general configuration, and are usually realized by DSP and the like that is built into the camera module.

FIG.3 is the structure of an image encoder. The image encoder of the present invention divides a general encode process into a partial encoder and a stream combining processes. Furthermore, in order to encode an image by each part, it has a partial stream holding buffer to hold an intermediate result.

The partial encoder is a process configured as to encode one part of an image when only that one part of an image is inputted.

In a general image encoding method (JPEG, etc.), an image is divided into small blocks (such as 16 x16 pixel), each of which is encoded to construct a stream data with a header.

The partial encoder is equivalent to the encoding process of each block extracted from the above method, and has a function to perform the encode processing of each block included in an inputted image and to write the intermediate result in a memory.

The stream combining process has a function of adding a header by having the configuration as the intermediate result stored in the partial stream holding buffer as one stream.

Since the partial stream holding buffer holds an encoded image, not a raster image, the partial stream holding buffer should keep only the capacity according to the size after an encoding. Typically, it is about 1Mbyte to 2Mbyte in a JPEG image of 5Mpixel. Furthermore, the partial stream holding buffer and an output buffer may be in common.

Next, an operation of this embodiment will be described. First, the control unit gives a capturing direction to the camera module, the camera module acquires a sensor image, and generates an image on an image RAM inside the camera module.

Next, by the method shown in FIG. 4, up to the generation of encoded image data is performed. In the present invention, an image is processed by dividing into a designated number by a division number. FIG. 4 is an example of having a division processing of an image with a division number 3.

Each part being divided will be processed as follows.

(1) One area divided from a camera module is acquired. The acquired data is stored in an input buffer.

(2) By the partial encoder of an image encoder, an image stored in an input buffer is partially encoded. The result of the encoding is stored in a partial stream holding buffer. At this point, it is a partial stream and because a header is not added yet, it is in an incomplete state as an encoded image data.

(3) (1) ~ (2) is repeated as many times as the division number.

(4) By the stream concatenation process of an image encoder, partial streams stored in the partial stream holding buffer are combined. The combined stream is outputted to an output buffer as the encoded data, to which a header is added.

After the all of the above is being performed, a control unit directs the elimination of the image and disconnection of the power to a camera module, and completes the process by storing the encoded image data to an external storage device and the like if necessary.

Further, although it is divided in a horizontally long reed shape in FIG. 4, it may be divided vertically long or in both horizontal and vertical direction. However, in general, to divide in a horizontally long reed shape is easier to implement. This is because the original processing of an image encoding of each line from top to bottom is processed from left to right. In the present invention, by putting rotational process of acquiring an image to an intermediate from a camera module and an image encode processing into a form of possible division process, it is possible to capture a large sized image while reducing the amount of requirement of a memory capacity.

Another embodiment of the present invention is shown in FIG. 5. The configuration shown in FIG. 5 is constructed by adding a function of rotating and encoding an image to the configuration described in FIG. 1. This is useful when a camera module is set in inclined position due to the convenience and the like of an implemented area in the image capturing device.

In FIG. 5, an intermediate buffer and an image rotational process are added to FIG. 1. The image rotational process is simply a process just to rotate an image and it can be configured by a general method.

Unlike the case in FIG. 1, the image outputted from a camera module is once stored in an intermediate buffer, and is stored in an input buffer via an image rotational process in this embodiment.

According to this embodiment, an image is divided in a horizontal direction on an image RAM of the camera module. Depending on the division number, a capacity of the intermediate buffer and the input buffer is determined as follows.

The length of the divided side = horizontal width on the image RAM ö the number of the division

The capacity of the intermediate buffer = the length of the divided side × the capacity that can store an image of the length of the divided side

The capacity of the input buffer = longitudinal width on the image RAM × the capacity that can store an image of the length of the divided side

Referring now to FIG. 6, an operation of this embodiment is shown. The operation after a generation of an image to an image RAM inside a camera module is as follows.

First, a square area corresponding to the length of the divided side x the length of the divided size is acquired from the camera module. The image data acquired will be stored in an intermediate buffer.

Next, the image of the intermediate buffer is rotated in an image rotational process, and stored in an input buffer. At this time, the squared area is stored in order to be stored in the input buffer in the rotated state of the divided area.

The above-mentioned two steps are repeated as many times as the longitudinal width ö the division number, on the image RAM.

Then, the image stored in the input buffer is partially encoded by a partial encoder of an image encoder. The result of the encoding is stored in a partial stream holding buffer.

The above-mentioned four steps are repeated as many times as the number of the division.

Finally, by the stream concatenation process of an image encoder, partial streams stored in the partial stream holding buffer are combined. The combined stream is outputted to an output buffer as the encoded data, to which a header is added.

As described above, even when a rotation is necessary, by adding a small capacity of a memory according to the number of the division to the intermediate buffer, the function of encoding by rotating can be realized.

According to this embodiment, even if the capturing of a large sized image is required, the capacity of a memory required for processing, and especially, the additional capacity of a memory required for the rotation can be reduced.

In addition, each embodiment mentioned above is the preferred embodiment of the present invention, and various changes can be made without departing from the scope of the invention. For example, a process of realizing a function of a device may be performed by having the device to read the program for realizing a function of an image capturing device. Further, the program thereof may be transmitted to other computer systems by a CD-ROM that is computer readable recording medium, or a magneto optical disk, or an internet being as a transmission medium, or a transmitted wave via telephone lines and the like.

In addition, this application claims the priority of Japanese patent application No. 2007-303094 filed on Nov. 22, 2007, the disclosure of which is incorporated herein in its entirety by reference.

INDUSTRIAL APPLICABILITY

The present invention, for example, is applicable to an image capturing device capturing an image (still image or moving image).

BRIEF DESCRIPTION OF THE DRAWINGS

FIG. 1 is a diagram showing a configuration according to the embodiment of the present invention;
FIG.2 is a diagram showing a configuration of a module according to the embodiment of the present invention;
FIG. 3 is a diagram showing a configuration of an image encoder according to the embodiment of the present invention;
FIG. 4 is a diagram showing up to a generation of encoded image data according to the embodiment of the present invention;
FIG. 5 is a diagram showing the other embodiment of the present invention; and
FIG. 6 is a diagram showing an operation according to the other embodiment of the present invention.

## Claims

**1.** An image capturing device comprising:

a division transfer means for individually outputting arbitrary rectangular areas in captured images;
a division encoding means for encoding the data from said division transfer means using a partial encoder; and
a combining means for combining the encoded data at the end.

**2.** The image capturing device of claim 1 further comprising a rotational process means for performing a rotational process of an image data outputted by said division transfer means.

**3.** An encoding method comprising:

a division transfer step for individually outputting arbitrary rectangular areas in captured images;
a division encoding step for encoding the data from said division transfer means using a partial encoder; and
a combining step for combining the encoded data at the end.

**4.** The encoding method of claim 3 further comprising a step for performing a rotational process of an image data outputted by said division transfer step.

**5.** A program performing:

a division transfer step for individually outputting arbitrary rectangular areas in captured images to a computer;
a division encoding step for encoding the data from said division transfer means using a partial encoder; and
a combining step for combining the encoded data at the end.

**6.** The program of claim 5 further performing a step for a rotational process of an image data outputted by said division transfer step.

Fig.1

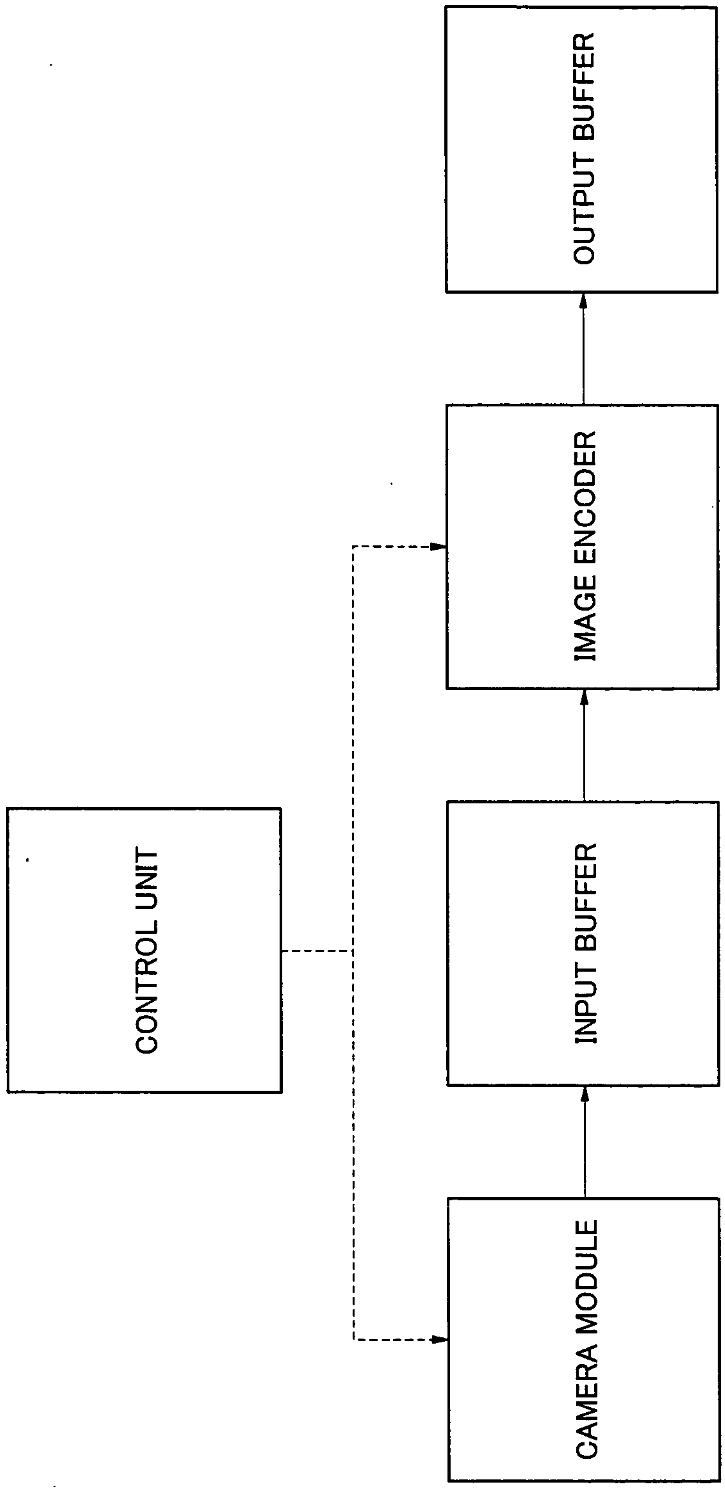
OUTPUT BUFFER
IMAGE ENCODER
CONTROL UNIT
INPUT BUFFER
CAMERA MODULE

Fig.2

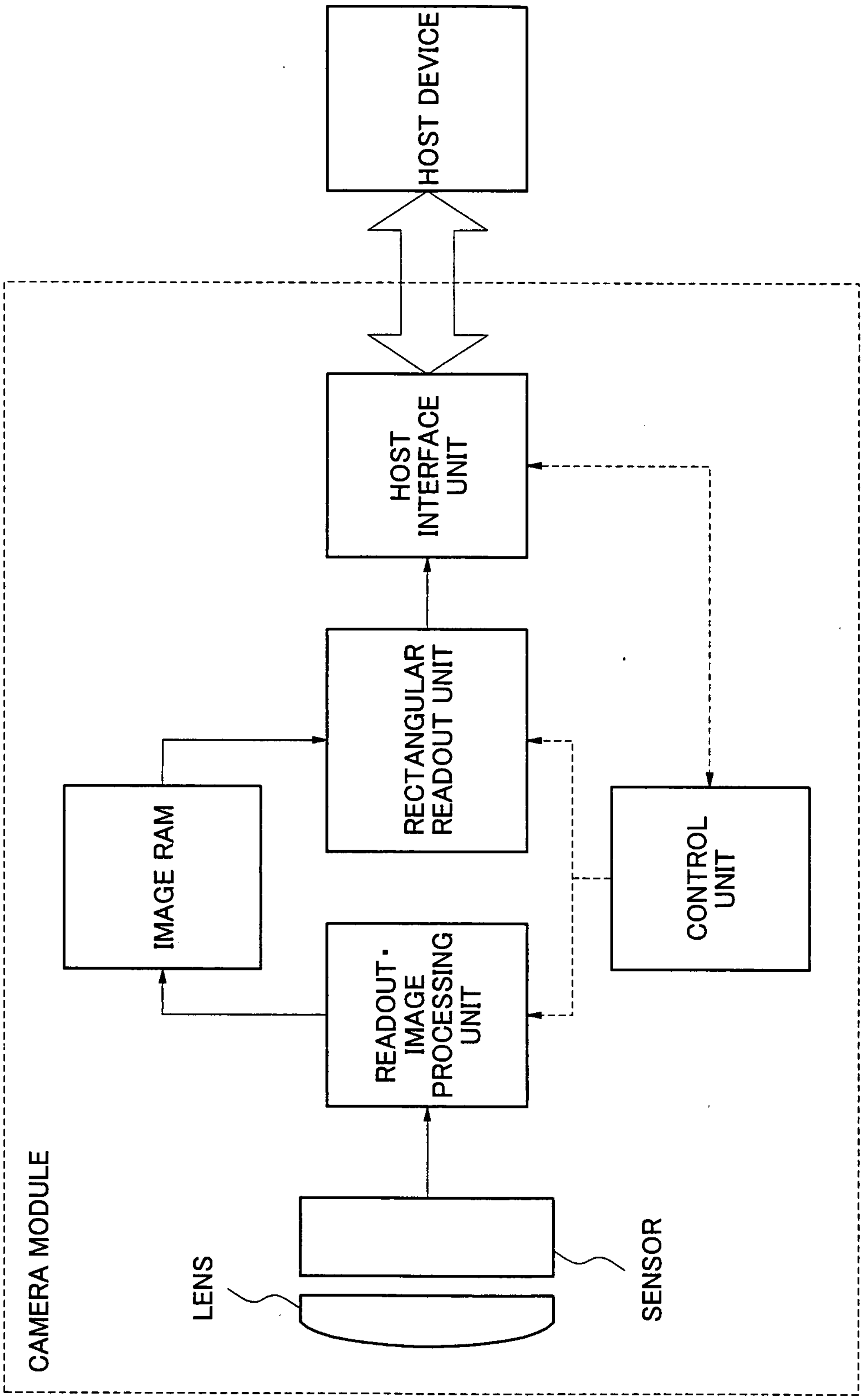
HOST DEVICE
HOST INTERFACE UNIT
RECTANGULAR READOUT UNIT
IMAGE RAM
CONTROL UNIT
READOUT · IMAGE PROCESSING UNIT
CAMERA MODULE
LENS
SENSOR

Fig.3

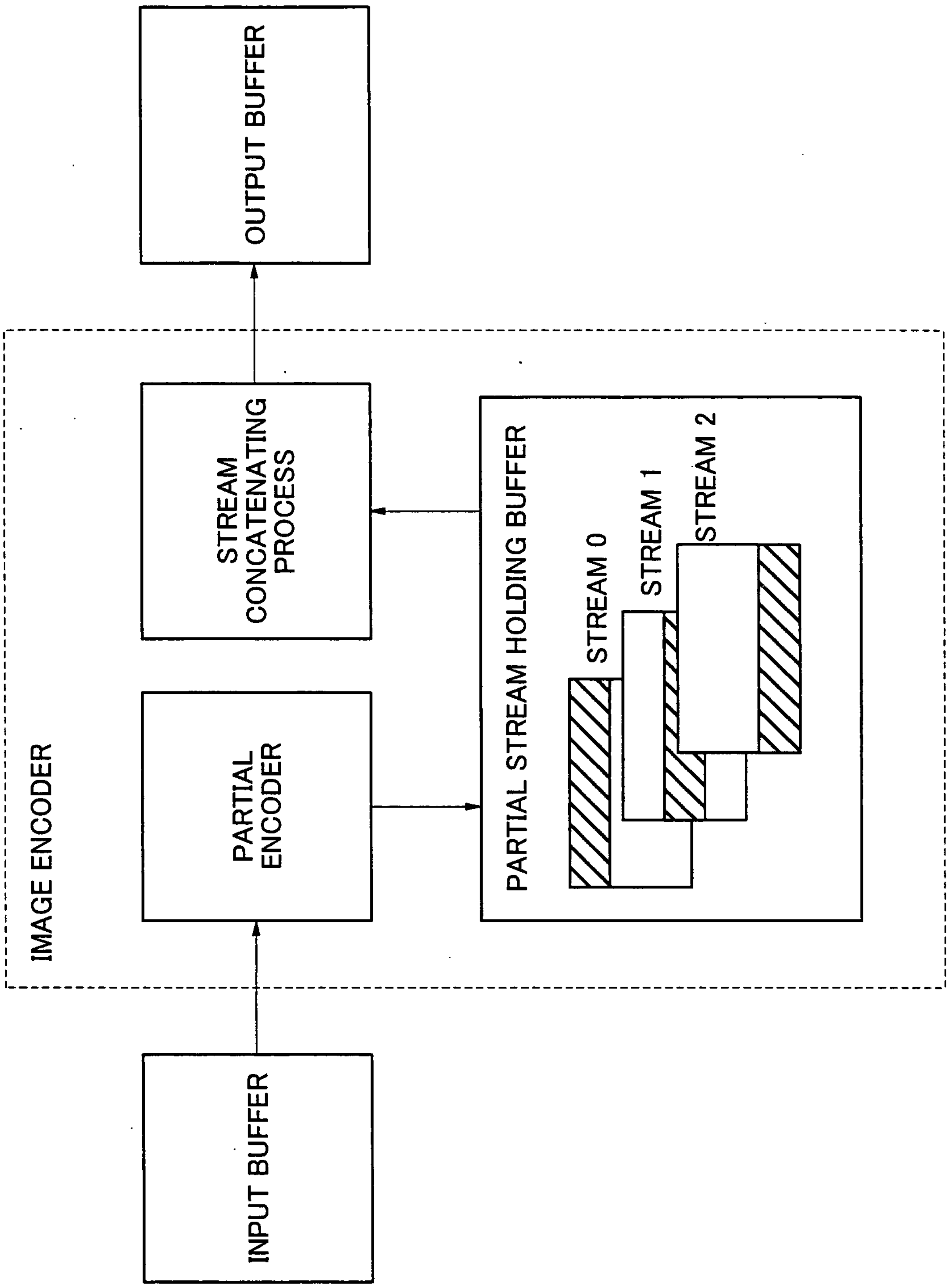
INPUT BUFFER
IMAGE ENCODER
PARTIAL ENCODER
STREAM CONCATENATING PROCESS
OUTPUT BUFFER
PARTIAL STREAM HOLDING BUFFER
STREAM 0
STREAM 1
STREAM 2

Fig.4

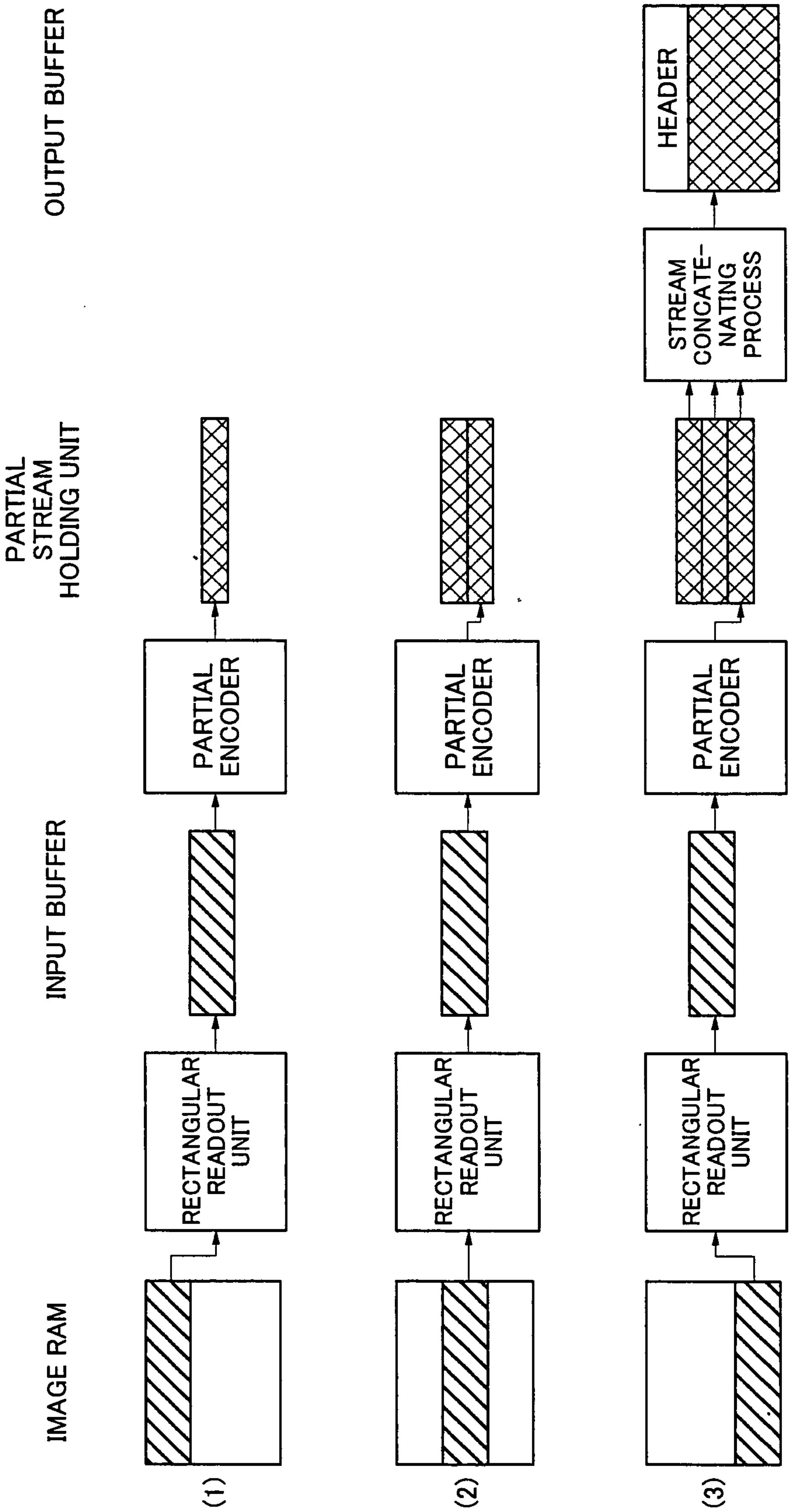
IMAGE RAM
RECTANGULAR READOUT UNIT
INPUT BUFFER
PARTIAL ENCODER
PARTIAL STREAM HOLDING UNIT
STREAM CONCATE-NATING PROCESS
OUTPUT BUFFER
HEADER
(1)
(2)
(3)

Fig.5

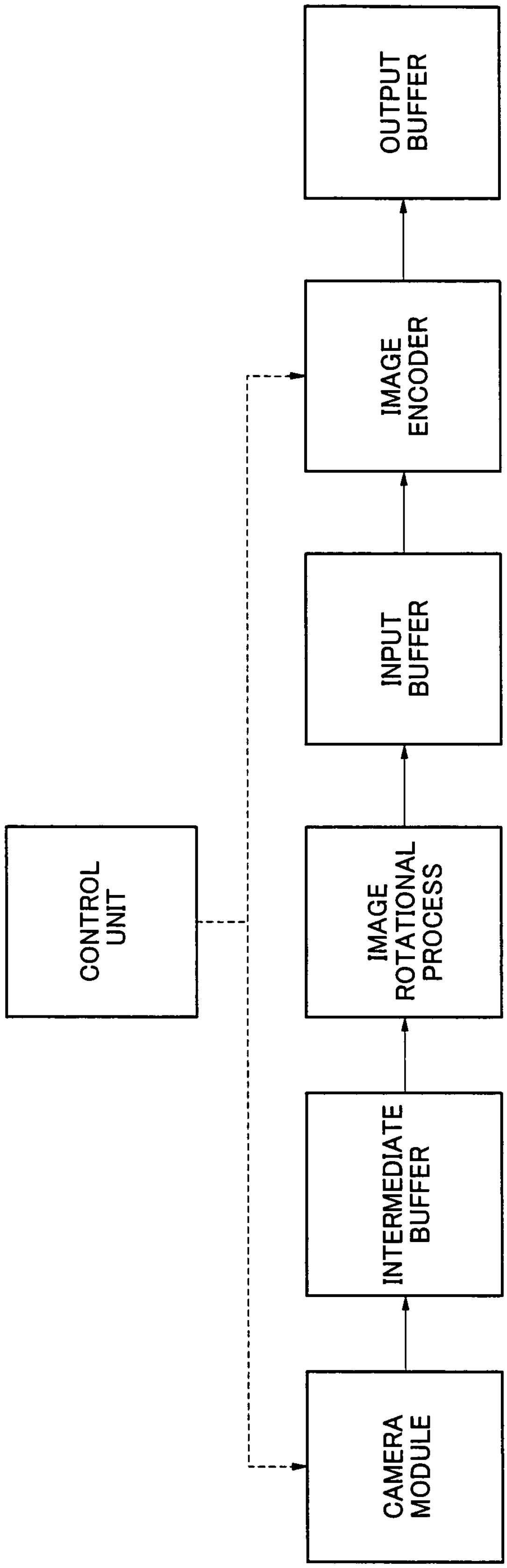
CAMERA MODULE
INTERMEDIATE BUFFER
IMAGE ROTATIONAL PROCESS
INPUT BUFFER
IMAGE ENCODER
OUTPUT BUFFER
CONTROL UNIT

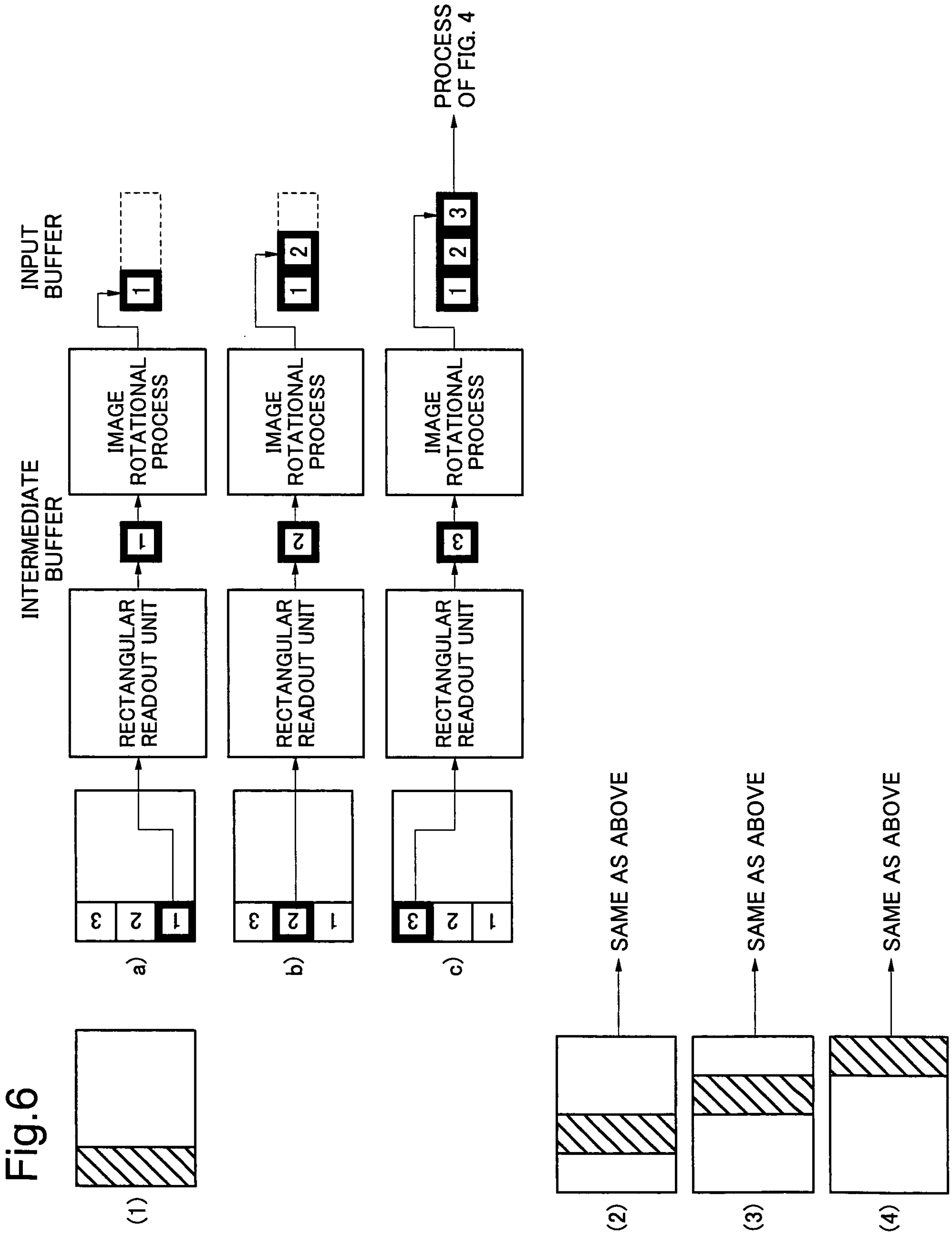
INPUT BUFFER
INTERMEDIATE BUFFER
PROCESS OF FIG. 4
RECTANGULAR READOUT UNIT
IMAGE ROTATIONAL PROCESS
a)
b)
c)
1
2
3
SAME AS ABOVE
SAME AS ABOVE
SAME AS ABOVE
(1)
(2)
(3)
(4)

Fig.6

## INTERNATIONAL SEARCH REPORT

International application No.
PCT/JP2008/070819

A. CLASSIFICATION OF SUBJECT MATTER
*H04N7/26*(2006.01)i, *H04N1/41*(2006.01)i, *H04N5/225*(2006.01)i

According to International Patent Classification (IPC) or to both national classification and IPC

B. FIELDS SEARCHED

Minimum documentation searched (classification system followed by classification symbols)
H04N7/26, H04N1/41, H04N5/225

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-234043 A (Toshiba Corp.),<br>02 September, 1998 (02.09.98),<br>Par. Nos. [0027] to [0034], [0046], [0101]<br>(Family: none) | 1,3,5<br>2,4,6 |
| Y | JP 2006-50218 A (Canon Inc.),<br>16 February, 2006 (16.02.06),<br>Par. Nos. [0042], [0084]<br>& US 2006/0029292 A1 | 2,4,6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2008 (03.12.08) | 13 January, 2009 (13.01.09) |
| Name and mailing address of the ISA/<br>Japanese Patent Office<br>Facsimile No. | Authorized officer<br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000244912 A
- JP 2007303094 A